## Europäisches Patentamt
## European Patent Office
## Office européen des brevets

(11) Veröffentlichungsnummer: **0 170 298**
**B1**

(12) **EUROPÄISCHE PATENTSCHRIFT**

(45) Veröffentlichungstag der Patentschrift:
**29.06.88**

(21) Anmeldenummer: **85112240.8**

(22) Anmeldetag: **12.04.85**

(51) Int. Cl.⁴: **F 16 D 65/12**

(54) Befestigungsanordnung für Scheibenbremsen, insbesondere für Schienenfahrzeuge.

(30) Priorität: **12.04.84  DE 3413843**

(43) Veröffentlichungstag der Anmeldung:
**05.02.86 Patentblatt 86/6**

(45) Bekanntmachung des Hinweises auf die Patenterteilung:
**29.06.88 Patentblatt 88/26**

(84) Benannte Vertragsstaaten:
**DE FR GB**

(56) Entgegenhaltungen:
**EP-A-0 077 433**
**EP-A-0 065 361**
**DE-A-2 806 028**
**DE-A-2 828 109**
**DE-A-2 906 589**
**DE-A-3 201 107**
**DE-A-3 320 543**
**FR-A-2 525 714**

(73) Patentinhaber: **KNORR- BREMSE AG, Moosacher Strasse 80 Postfach 401060, D-8000 München 40 (DE)**

(72) Erfinder: **Schörwerth, Mathias, Lilienstrasse 3, D-8192 Geretsried 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Befestigungsanordnung nach dem Gattungsbegriff des Patentanspruches 1.

Es sind Bremsscheibenkonstruktionen bekannt (EP-A-0 085 361), bei welchen zwei Bremsscheibenringe bzw. -hälften mittels vom Innen- zum Außenumfang durchgehender Befestigungsstege miteinander verbunden sind. Die Stege sind in Umfangsrichtung unter Abstand zueinander ausgerichtet, so daß eine begrenzte Lüfterwirkung zwischen den Innenflächen der Bremsscheibenringen existiert. Der aus den beiden Bremsscheibenringen bestehende Bremsscheibenkörper ist an seinem Innenumfang im Bereich von radial nach innen vorstehenden Laschen an von einem Nabenkörper einer Welle radial auskragenden Nabenabschnitten befestigt. Hierzu vorgesehene Befestigungsschrauben erstrecken sich in Querrichtung durch die Laschen und die Nabenabschnitte, wobei das Anziehen der Befestigungsschrauben d. h. das Ausmaß des beim Verschrauben angelegten Drehmoments im wesentlichen durch den tatsächlich existierenden Abstand zwischen den Außenflächen der Laschen der Bremsscheibenringe festgelegt ist. Dieser Abstand bleibt unbeeinflußt, da sich die Verbindungsstege im wesentlichen voll zwischen Innen- und Außenumfang der Bremsscheibenringe erstrecken und diese einstückig miteinander verbinden. Fertigungstoleranzen an den einander zugewandten Flächen der Laschen und Nabenabschnitte können folglich nur im begrenzten Ausmaß ausgeglichen werden. In gleicher Weise ist es nicht möglich, den durch Erwärmung auftretenden Toleranzen gerecht zu werden, mit der Folge, daß das Bremsmoment einschließlich radialer und axialer Stöße größtenteils durch die Befestigungsschrauben hindurch verläuft. Die Gefahr ungleichförmiger Verspannungen ist hierbei nicht auszuschließen.

Das Prinzip, Befestigungsmittel unter Vorspannung anzuwenden, ist bei Bremsscheiben gattungsfremder Art an sich bereits bekannt (DE-A-2 828 109). Bei derartigen Konstruktionen besitzen die Befestigungsschrauben im kalten Zustand der Bremsscheibe vorbestimmte Winkellagen, welche bei Erwärmung der Bremsscheiben, d. h. im Betrieb infolge von Dehnungsbewegungen Vorspannungen erzeugen, mit der Folge, daß die miteinander verbundenen Teile der Bremsscheibe im Wege des Abkühlens wieder ihre ursprüngliche Lage einzunehmen vermögen.

Davon ausgehend besteht die Aufgabe der Erfindung darin, eine Befestigungsanordnung für Bremsscheiben der in Rede stehenden Art baulich einfach zu gestalten, wobei dennoch eine exakte Führung erreicht werden soll. Insbesondere soll die Befestigungsanordnung bei hohen thermischen Belastungen im Betrieb von mit hoher Geschwindigkeit fahrenden Schienenfahrzeugen verwendbar sein.

Zur Lösung dieser Aufgabe dienen die Merkmale nach dem Kennzeichnungsteil des Patentanspruches 1.

Durch die Gestaltung der Bremsscheibe mit vorzugsweise am Außenumfang durchgehenden Verbindungsstegen ist es ermöglicht, Bremsscheiben im Bereich der Befestigungsschrauben zu verspannen. Die Möglichkeit der Verspannung bedeutet, daß die an der Bremsscheibe radial innenseitig angeordneten Laschen mit Hilfe der Spann- bzw. Befestigungsschrauben mit einem Gesamtmaß von 0,05 - 0,1 mm gegenseitig verspannbar sind, wobei das Bremsmoment einschließlich radialer und axialer Stöße durch den Reibschluß zwischen den Laschen und den Nabenabschnitten aufgenommen wird. Als Befestigungsschrauben können sowohl Durchgangsschrauben als auch Gleitpaßschrauben mit Gleitbuchsen verwendet werden.

Eine vorteilhafte Ausgestaltung und Weiterbildung ist im Unteranspruch aufgeführt.

Die Erfindung ist nachfolgend anhand eines Ausführungsbeispiels unter Bezugnahme auf die beigefügte Zeichnung erläutert.

Fig. 1    ist eine Schnittansicht einer erfindungsgemäßen Bremsscheibe; und

Fig. 2    ist eine Schnittansicht von Linie II-II in Fig. 1.

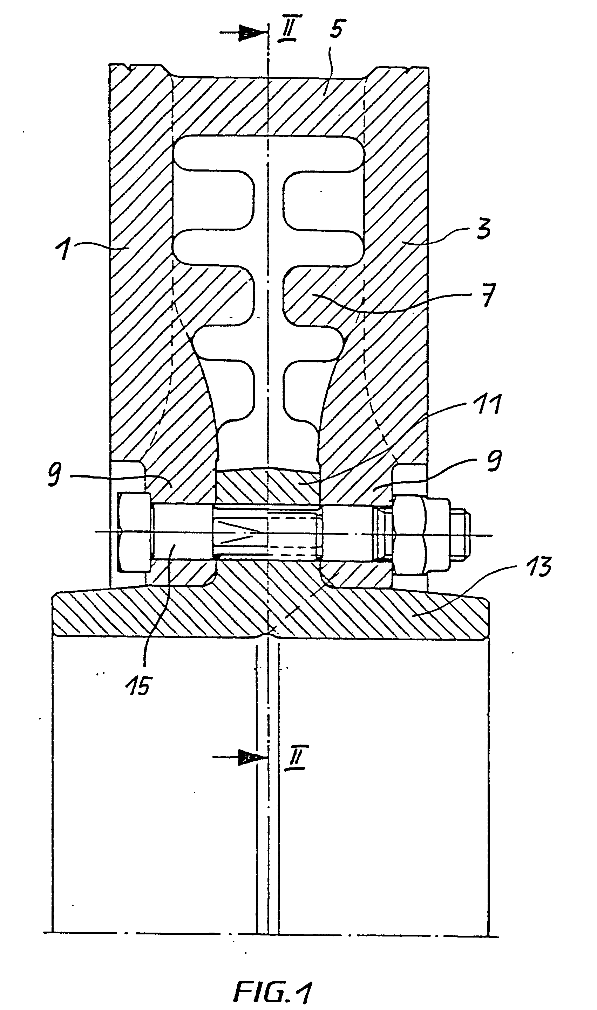

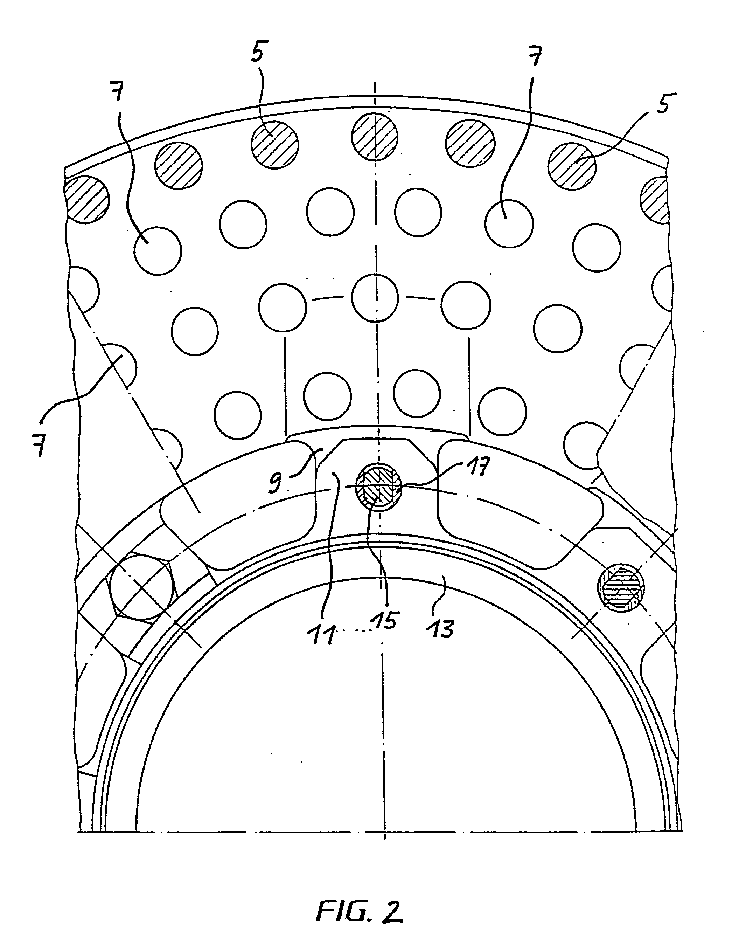

In Fig. 1 der Zeichnung ist eine Bremsscheibe in Form einer sogenannten Wellenbremsscheibe dargestellt. Bei dieser sind zwei Bremsscheibenringe 1 und 3 vorgesehen, welche an ihrem Außenumfang mit Hilfe von durchgehenden Verbindungsstegen 5 miteinander verbunden sind. Radial innerhalb der Verbindungsstege 5 (Fig. 1 und 2) befinden sich Stummelrippen 7, welche unter Abstand einander gegenüberstehen und zu einer guten Durchlüftung als auch Wärmeabführung zwischen den Bremsscheibenringen 1 und 3 beitragen.

Die beiden Bremsscheibenringe 1 und 3 sind an ihrem Innenumfang mit Abstand zueinander aufweisenden Laschen 9 versehen, zwischen welchen bei Montage der Bremsscheibe jeweils Nabenabschnitte 11 eines Nabenkörpers 13 zu liegen kommen. Der Nadenkörper 13 besteht beispielsweise aus Kugelgraphitguß, während die Bremsscheibe selbst vorzugsweise aus Grauguß gefertigt ist. Wie Fig. 1 veranschaulicht, sind die Laschen 9 und der Nabenabschnitt 11 durch Befestigungsschrauben 15 durchsetzt. Mit Hilfe der Befestigungsschrauben kann den Laschen 9 eine vorbestimmte elastische Durchbiegung aufgezwungen werden. Zu diesem Zweck ist es möglich, die Bremsscheibenringe 1 und 3 im Bereich ihrer Laschen 9 so auszubilden, daß sie zunächst, d. h. ohne Verspannung durch die Befestigungsschrauben 15, ohne Auflage den Nabenabschnitten 11 gegenüberliegen. Wenn die Befestigungsschrauben 15 angezogen werden, dann ist es möglich, ihnen einen federnden Weg zueinander von insgesamt 1,0 mm aufzuzwingen, ohne daß hierbei nennenswerte Spannungen in den Verbindungsstegen 5 hervorgerufen werden. Die Durchbiegung im Bereich der Laschen liegt demnach bei 0,5 mm pro Hälfte der Bremsscheibe. Die elastische Verformung der Bremsscheiben- bzw. Reibringe wird dazu benutzt, die Abweichungen auszugleichen, die bei der Bearbeitung der Laschen der Bremsscheibenringe bzw. der Nabenabschnitte entstehen. Durch die vorgeschriebene axiale Verspannung wird außerdem erreicht, daß das Bremsmoment einschließlich radialer und axialer Stöße durch Reibschluß zwischen den Laschen und den Nabenabschnitten übertragen wird.

Nach einer vorteilhaften Ausführungsform sind die Befestigungsschrauben als Gleitpaßschrauben ausgebildet (Fig. 2), welche eine "orientierte" Relativverschiebung zwischen den Bremsscheibenringen und den Nabenabschnitten hervorrufen, da sie in in ihrer Lage durch gleichfalls orientierte Gleitschalen oder Gleitbuchsen 17 geführt sind.

**Patentansprüche**

1. Befestigungsanordnung für Bremsscheiben von Schienenfahrzeugen, mit Befestigungsschrauben (15), welche sowohl Bohrungen von Bremsscheibenringen (1, 3) bzw. -abschnitten als auch Bohrungen eines Nabenkörpers (13) für die Bremsscheibe durchsetzen und eine begrenzte Relativbewegung der miteinander verbundenen Teile zueinander gestatten, wobei die Bremsscheibenringe (1; 3) durch Verbindungsstege (5) miteinander verbunden sind und im Bereich ihres Innenumfanges radial nach innen gerichtete Laschen (9) aufweisen, welche zwischen sich Nabenabschnitte (11) des mit einer Welle verbundenen Nabenkörpers (13) aufnehmen, dadurch gekennzeichnet, daß sich die Verbindungsstege (5) im Bereich des Außenumfanges der beiden Bremsscheibenringe (1, 3) erstrecken, daß radial innerhalb der Verbindungsstege (5) mit den Bremsscheibenringen verbundene Stummelrippen (7) einander unter Abstand gegenüberstehen und daß den Laschen (9) gegenüber den Nabenabschnitten (11) mit Hilfe der Befestigungsschrauben (15) ein federnder Weg mit Vorspannung aufgezwungen ist.

2. Befestigungsanordnung nach Anspruch 1, dadurch gekennzeichnet, daß die Befestigungsschrauben aus Gleitpaßschrauben bestehen, welche in radial gerichteten Gleitbuchsen (17) geführt sind.

**Claims**

1. Securing arrangement for disc brakes of rail vehicles, having securing screws (15) which penetrate bores of disc brake rings (1, 3) or portions, and also bores of a hub body (13) for the disc brake and ensure a limited relative movement of the parts which are joined together, wherein the disc brake rings (1; 3) are joined together by connecting bars (5) and in the region of their inner circumference have radially inwardly directed brackets (9) which receive between them hub portions (11) of the hub body (13) which is joined to a shaft, characterised in that the connecting bars (5) extend in the region of the outer circumference of the two disc brake rings (1, 3), in that radially inside the connecting bars (5) stub ribs (7) joined to the disc brake rings are spaced apart opposite each other and in that a resilient displacement with prestress is imposed on the brackets (9) relative to the hub portions (11) with the aid of the securing screws (15).

2. Securing arrangement according to claim 1, characterised in that the securing screws comprise sliding fit screws which are guided in radially directed sliding bushings (17).

**Revendications**

1. Dispositif de fixation pour des disques de frein de véhicules sur rails, avec des boulons de fixation (15) qui traversent des perçages ménagés dans des anneaux de disques de frein ou dans des sections d'anneaux de disques de frein, ainsi que des perçages d'un corps de moyeu (13) pour le disque de frein, et autorisent un mouvement relatif limité entre les éléments qui sont reliés entre eux, les anneaux du disque de frein (1; 3) étant reliés entre eux par des barrettes (5) et présentant, au niveau de leur périphérie intérieure des colliers de fixation (9) dirigés vers l'intérieur et recevant entre eux des sections de moyen (11) du corps de moyeu (13) relié à un essieu, caractérisé par le fait que les barrettes de liaison (5) s'étendent dans la zone de la périphérie extérieure des deux anneaux (1, 3) du disque de frein, que radialement à l'intérieur des barrettes de liaison (5) se font face à distance entre elles des tronçons de nervures (7) reliés aux anneaux du disque de frein, et qu'à l'aide des boulons de fixation (15) une course élastique, avec pré-tension, est imposée auxdits colliers de fixation (9), par rapport aux sections de moyen (11).

2. Dispositif de fixation selon la revendication 1, caractérisé par le fait que les boulons de fixation sont constitués par des boulons ajustés à glissement, guidés dans des douilles de glissement (17) dirigées radialement.

0 170 298

FIG.1

1

FIG. 2